# EUROPÄISCHE PATENTSCHRIFT

(11) **EP 0 650 945 B1**
(45) Veröffentlichungstag und Bekanntmachung des Hinweises auf die Patenterteilung: **13.08.1997**
(21) Anmeldenummer: 94116229.9
(22) Anmeldetag: 14.10.1994
(51) Int. Cl.: C04B 35/628, B22F 1/00, B22F 3/22, C04B 41/85, C23C 24/00, C03C 17/00, C04B 35/626, C04B 35/58, C04B 41/50

(54) **Verfahren zur Herstellung von Metall- und Keramiksinterkörpern und -schichten**
Process for the preparation of metal and ceramic sintered bodies and films
Procédé de préparation de corps ou de films frittés métalliques et céramiques

(30) Priorität: 27.10.1993 DE 4336694
(43) Veröffentlichungstag der Anmeldung: 03.05.1995
(73) Patentinhaber: H.C. Starck GmbH & Co. KG, 38642 Goslar (DE); INSTITUT FÜR NEUE MATERIALIEN gemeinnützige GmbH, 66123 Saarbrücken (DE)
(72) Erfinder: Schmidt, Helmut, Prof. Dr., D-66130 Saarbrücken (DE); Nass, Rüdiger, Dr., D-66292 Riegelsberg (DE); Aslan, Mesut, Dr., D-66953 Pirmasens (DE); Albayrak, Sener, D-66115 Saarbrücken (DE); Arpac, Ertugrul, Prof. Dr., D-66123 Saarbrücken (DE); König, Theo, Dr., D-79725 Laufenburg-Rotzel (DE); Fister, Dietmar, Dr., D-79730 Murg (DE)
(74) Vertreter: Steiling, Lothar, Dr.

(56) Entgegenhaltungen:
- WO-A-90/03838
- DE-A- 4 212 633
- PATENT ABSTRACTS OF JAPAN & JP-A-1 111 774 (NHK SPRING CO. LTD.) 28. April 1989 (A )

## Beschreibung

Die vorliegende Erfindung betrifft ein Verfahren zur Herstellung von gesinteren Körpern oder Schichten aus Metall- und/oder Keramikpulver unter Verwendung einer Suspension aus oberflächenmodifizierten nanoskaligen Metall- oder Keramikteilchen.

Unter "nanoskaligen Teilchen" sollen im folgenden Teilchen verstanden werden, deren durchschnittliche Größe nicht mehr als 100 nm, insbesondere nicht mehr als 50 nm und besonders bevorzugt nicht mehr als 30 nm beträgt.

Bei der Verarbeitung von nanodispersen Materialien (Teilchen, Pulvern) existieren im wesentlichen zwei Probleme, nämlich
(a) die Kontrolle der Teilchenagglomeration bei der Verarbeitung dieser Materialien und
(b) die Herstellung von verarbeitungsfähigen keramischen Massen mit hohen Feststoffgehalten

Hinsichtlich des Problems (a) ist festzustellen, daß beim Übergang von sub-mikron zu nanoskaligen keramischen Pulvern allgemein eine Zunahme der Agglomeration beobachtet wird. Dies ist darauf zurückzuführen, daß mit abnehmender Teilchengröße auch schwache Wechselwirkungskräfte, wie z.B. van der Waals-Kräfte, erheblich an Bedeutung gewinnen bzw. dominieren. Hinzu kommt, daß die Partikeloberfläche immer mit funktionellen, d.h. kondensationsfahigen, Gruppen belegt ist. Diese sind bei konventionellen Submikronpulvern nur insoweit von Bedeutung, als sie als Wechselwirkungszentren für erforderliche organische Prozeßhilfsmittel (Dispergierhilfsmittel, Bindemittel usw.) herangezogen werden können. Aufgrund des großen Oberflächen-zu-Volumen-Verhältnisses bei nanodispersen Materialien kommt den Oberflächengruppen aber auch in einer anderen Hinsicht große Bedeutung zu. Zum einen können sie ebenfalls als Reaktionszentren für organische Prozeßhilfsmittel dienen. Zum anderen können sie aber auch durch Kondensationsreaktionen zwischen einzelnen Partikeln zur Bildung harter Agglomerate führen. Die Partikel sind dann quasi über Sinterhälse miteinander verbunden. Es ist daher wünschenswert, Verfahren zu entwickeln, mit denen die Agglomeration soweit zu beherrschen ist, daß kontrolliert agglomerierte Pulver erhalten werden können. Des weiteren wäre es günstig, wenn mit diesen Verfahren die reaktive Oberfläche nach außen abgeschirmt und so eine interpartikuläre Kondensation verhindert werden könnte.

Zum obigen Problem (b) kann bemerkt werden, daß die Herstellung von keramischen Massen mit hohen Feststoffgehalten und auf ein Formgebungsverfahren abgestimmten Verarbeitungseigenschaften erhebliche Schwierigkeiten bereitet. Zur Vermeidung von Agglomeraten, die in grünen wie auch in gesinterten Körpern zu gravierenden Defekten führen können, wird allgemein in Suspensionen gearbeitet. Zur Suspensionsstabilisierung werden Dispergierhilfsmittel zugesetzt, die die Aufgabe haben, eine Agglomeration zu verhindern und der Suspension die benötigten Verarbeitungseigenschaften zu verleihen. Bei der Suspensionsstabilisierung können zwei prinzipielle Möglichkeiten unterschieden werden, nämlich die elektrostatische und die sterische Stabilisierung.

Die elektrostatische Stabilisierung hat den Nachteil, daß aufgrund des großen hydrodynamischen Radius der suspendierten Partikel nur geringe Feststoffgehalte realisiert werden können. Demgegenüber bietet die sterische Stabilisierung die prinzipielle Möglichkeit, Suspensionen mit hohen Feststoffgehalten aus nanoskaligen Materialien herzustellen, da hier der hydrodynamische Partikelradius viel kleiner ist.

Die Vorteile der sterischen Stabilisierung wurden am Beispiel von nanodispersem SiO₂ bereits gezeigt. Als Dispergierhilfsmittel wurden hier allgemein nichtionische organische Polymere (z.B. Polymethylmethacrylat) eingesetzt, die auf der Partikeloberfiäche adsorbiert werden. Der Nachteil einer derartigen Stabilisierung ist, daß auch hiermit nur maximale Feststoffgehalte von ca. 20 bis 30 Vol.-% realisierbar sind und eine Übertragbarkeit auf von SiO₂ verschiedene Stoffsysteme nur mit erheblichen Einschränkungen möglich ist. Dies liegt vor allem daran, daß die für ein Material spezifischen oberflächenchemischen Eigenschaften (z.B. saure/basische Eigenschaften) nicht berücksichtigt werden können.

Es ist daher wünschenswert, ein Verfahren bereitzustellen, mit dem es möglich ist, die Partikeloberfläche durch entsprechende chemische Verbindungen so zu modifizieren, daß ein optimaler Dispergiergrad erreicht und hohe Feststoffgehalte der Dispersion realisiert werden können.

Beispielsweise gehört Titannitrid (TiN) zur Gruppe der metallischen Hartstoffe und besitzt eine kubische Kristallstruktur. Aufgrund des hohen kovalenten Bindungsanteils besitzt TiN einen hohen Schmelzpunkt, eine hohe Härte sowie gute Oxidationsbeständigkeit und Korrosionsbeständigkeit. Aus diesen Eigenschaften resultieren die Anwendungen von TiN als Schichtmaterial für den Verschleißschutz auf Metallen und als eine der Komponenten in mehrphasigen Keramiken wie z.B. Al₂O₃/TiN oder Si₃N₄/TiN.

Reine TiN-Schichten bzw. TiN-Schichten mit Beimengungen von TiC werden heute über Gasphasenprozesse hergestellt. Hierzu zählen das CVD (chemical vapor deposition) und PVD (physical vapor deposition)-Verfahren. Entsprechende Anlagen sind kommerziell erhältlich und Bestandteil industrieller Fertigungsprozesse. Diese Schichten werden auf folgenden Gebieten eingesetzt:
- Verschleißschutz von Metallen bei abrasiven und tribologischen Anwendungen,
- auf Schneid-, Bohr- und Fräswerkzeugen zur Erhöhung der Zerspannungsleistung,
- als Korrosionsschutzschichten in chemischen Reaktoren,
- als Beschichtung von Uhrengehäusen und Schmuck.

Ein Nachteil der z.B. über CVD und PVD hergestellten TiN-Schichten besteht in der unzureichenden Haftung auf den Substraten, so daß die Schichten häufig abplatzen und damit beschichtete Werkzeuge vorzeitig unbrauchbar werden. Verwendbare Substrate sind Metalle mit hoher Wärmebeständigkeit, Hartmetalle, wie z.B. WC/Co oder auch keramische Wendeschneidplatten.

Eine andere Anwendung nanokristalliner keramischer Pulver wie TiN, TiC, SiC betrifft den Einsatz in Mischkeramiken, wie z.B. Al₂O₃/TiC oder Si₃N₄/TiN. Durch die Zugabe solcher Pulver zu den Matrixmaterialien können deren mechanische Eigenschaften, wie z.B. Härte, Zähigkeit oder Druckfestigkeit, verbessert werden. In gleicher Weise werden die mechanischen Eigenschaften von Bulk-Keramiken und pulvermetallurgisch hergestellten metallischen Werkstoffen durch den Einsatz nanokristalliner Pulver wesentlich verbessert.

Beispielsweise besitzt reines TiN aufgrund seines hohen kovalenten Bindungscharakters nur eine sehr geringe Sinteraktivität. Eine Verdichtung erfordert daher normalerweise den Einsatz von Sinteraktivität. Im einfachsten Fall kann dies TiO₂ sein, das an Luft in Gegenwart von Wasser an der TiN-Oberfläche gebildet wird. So ist z.B. berichtet worden, daß TiN-Pulver mit einer mittleren Korngröße von 0,1µm drucklos bei Temperaturen um 1 500°C bis zu relativen Dichten von 95 % gesintert werden kann. Dieses Sinterverhalten wird der Aktivierung der zur Verdichtung führenden Diffusionsmechanismen über die Auflösung von an der TiN-Teilchenoberfläche lokalisiertem TiO₂ zugeschrieben.

In DE-A-42 12 633 wird ein Verfahren zur Herstellung oberflächenmodifizierter nanoskaliger Pulver offenbart, nach dem sich Teilchendispersionen mit hohen Feststoffgehalten und gutem Dispergiergrad der festen Phase erreichen lassen. Diese Teilchendispersionen können dann zu Sinterformteilen weiterverarbeitet werden.

Verschiedene Publikationen beschäftigen sich mit der Sinterung von TiN unter Druck und/oder in Gegenwart von Sinteradditiven. So führt das Heißpressen von TiN-Pulvern mit einem d₅₀-Wert von 1 µm bei Temperaturen bis zu 2 100°C und einem Preßdruck von 14 MPa nur zu einer Dichte von 93 % der Theorie; siehe M. Morijama et al, "Mechanical and Electrical Properties of Hot-pressed TiN-Ceramics without Additives", J. Jap. Ceram. Soc., 99 (1991). Bei M. Morijama et al., "The Mechanical Properties of Hot-pressed TiN-Ceramics with Various Additives", J. Jap. Ceram. Soc., 101 (1993) wird das Verdichtungsverhalten von TiN in Gegenwart von Sinteradditiven beim Heißpressen beschrieben. Proben mit insgesamt 10 Gew.-% Al₂O₃, Y₂O₃ und B₄C ergeben nach dem Heißpressen bei 1 950°C und 14 MPa Dichten um 97 % der Theorie. Ferner ist über eine 95 %ige Verdichtung durch Heißpressen bei 1 800°C und 5,0 GPa berichtet worden.

Aufgabe der Erfindung ist es, ein Verfahren zu Herstellung von Metall- und/oder Keramiksinterkörpern und -schichten bereitzustellen, das eine Kontrolle der Teilchenagglomeration und ausreichend hohe Feststoffgehalte der eingesetzten Teilchensuspension ermöglicht und bei niedrigeren Sintertemperaturen durchgeführt werden kann.

Erfindungsgemäß wird diese Aufgabe gelöst durch ein Verfahren zur Herstellung von Metall- und/oder Keramiksinterkörpern oder -schichten, bei dem man nanokristallines Metall- und/oder Keramikpulver in Anwesenheit mindestens einer niedrigmolekularen organischen Verbindung, die über mindestens eine funktionelle Gruppe verfügt, welche mit an der Oberfläche der Pulverteilchen vorhandenen Gruppen reagieren und/oder wechselwirken kann, in Wasser und/oder einem polaren organischen Lösungsmittel als Dispergiermedium dispergiert, das Dispergiermedium entfernt und das oberflächenmodifizierte Metall- und/oder Keramikpulver, das vor oder nach dem Entfernen des Dispergiermediums zu Grünkörpern oder Schichten verarbeitet worden ist, sintert, dadurch gekennzeichnet, daß bei dem genannten nanokristallinen Keramik- und/oder Metallpulver weniger als 1 % der Einzelpartikel eine Abweichung von mehr als 40 % und keine Einzelpartikel eine Abweichung von mehr als 60 % von der mittleren Korngröße aufweisen.

Das erfindungsgemäße Verfahren ermöglicht es, die Agglomeration von nanoskaligen Metall- und Keramikpulvern zu kontrollieren, wodurch Dispersionen derartier Teilchen mit hohen Feststoffgehalten in zufriedenstellender Weise hergestellt werden können.

Als Ausgangsmaterial für das erfindungsgemäße Verfahren eignen sich insbesondere nanokristalline Metall- und Keramikpulver mit einer Primärteilchengröße von vorzugsweise unter 100 nm. Dieses Pulver ist im Anlieferungszustand stark agglomeriert. Besonders bevorzugte Metall- und Keramikpulver, wie sie in den Unteransprüchen definiert sind, werden in den nicht vorreröffentlichten deutschen Patentanmeldungen DE-A-42 14 722, 42 14 723, 42 14 724 und 42 14 725 offenbart. Sie sind erhältlich nach dem CVR-Verfahren, wie es aus der deutschen Patentanmeldung DE -A-42 14 719 hervorgeht, in einer CVR-Vorrichtung, wie sie Gegenstand der deutschen Patentanmeldung DE-A-42 14 725 ist. Der Inhalt dieser Patentanmeldungen wird durch Inbezugnahme vollständig in die vorliegende Anmeldung aufgenommen.

Die Patentanmeldung DE-A-42 14 719 offenbart ein Verfahren zur Herstellung feinteiliger Metall- und/oder Keramikpulver durch Reaktion entsprechender Metallverbindungen und entsprechender Reaktionspartner in der Gasphase -CVR-, wobei die Metallverbindung(en) und die weiteren Reaktionspartner in einem Reaktor im gasförmigen Zustand zur Reaktion gebracht, direkt aus der Gasphase homogen unter Ausschluß jeglicher Wandreaktion auskondensiert und anschließend vom Reaktionsmedium abgetrennt werden, welches dadurch gekennzeichnet ist, daß die Metallverbindungen und die Reaktionspartner getrennt voneinander mindestens mit Reaktionstemperatur in den Reaktor eingebracht werden. Für den Fall, daß mehrere Metallverbindungen und/oder Reaktionspartner eingebracht werden sollen, sind die jeweiligen Gasmischungen so zu wählen, daß während des Aufheizens keine Reaktion auftritt, die zu festen Reaktionsprodukten führt. Besonders vorteilhaft läßt sich das Verfahren in einem Rohrreaktor durchführen. Es ist besonders günstig, wenn die Metallverbindungen, die Reaktionspartner und die Produktpartikel den Reaktor laminar durchströmen. Besonders bevorzugt ist es, die Metallverbindungen und die Reaktionspartner als koaxiale laminare Teilströme in den Reaktor einzubringen. Um jedoch die Durchmischung bei beiden koaxialen Teilströme sicherzustellen, wird durch Einbau eines Störkörpers in der sonst streng laminaren Strömung eine in Intensität und Aufweitung definierte Karman'sche Wirkbelstraße erzeugt.

Eine bevorzugte Ausführungsform des Verfahrens besteht also darin, daß die koaxialen, laminaren Teilströme der Metallverbindung(en) und der Reaktionspartner mittels einer Karman'schen Wirbelstraße in definierter Weise vermischt werden.

Um die energetisch stark bevorzugte Abscheidung der Reaktionsteilnehmer an der Reaktorwand zu verhindern, wird bevorzugt das Reaktionsmedium durch eine Inertgasschicht abgeschirmt. Dies kann dadurch erfolgen, daß durch speziell geformte Ringspalte in der Reaktorwand ein Inertgasstrom eingebracht wird, der über den Coandaeffekt an der Reaktorwand anliegt. Die im Reaktor durch eine homogene Abscheidung aus der Gasphase bei typischen Verweilzeiten zwischen 10 und 300 msec entstandenen Metall- oder Keramikpulverpartikel verlassen diesen gemeinsam mit den gasförmigen Reaktanten und den Inertgasen, die als Trägergas, Spülgas und zum Zwecke der Verminderung der HCl-Adsorption eingeblasen werden.

Vorzugsweise wird dann die Abtrennung der Metall- oder Keramikpulver bei Temperaturen oberhalb der Siede- bzw. Sublimationstemperaturen der eingesetzten Metallverbindungen, Reaktionspartner und/oder während der Reaktion gebildeten Zwangsanfallsprodukte vorgenommen. Die Abtrennung kann dabei vorteilhaft in einem Rückblasfilter vorgenommen werden. Wenn dieser bei hohen Temperaturen von z.B. 600°C betrieben wird, kann die Adsorption der Gase, insbesondere der nicht inerten Gase wie HCl, NH₃, TiCl₄ usw., an der sehr großen Oberfläche der Keramik- oder Metallpulver gering gehalten werden. Insbesondere wird bei der Herstellung von Nitriden die Bildung von NH₄Cl verhindert (größer als 350°C).

Die noch verbliebenen, an der Pulveroberfläche adsorbierten störenden Substanzen können in einem nachgeschalteten Vakuumbehälter weiter entfernt werden, vorzugsweise wieder bei Temperaturen von ca. 600°C. Die fertigen Pulver sollten dann unter Luftausschluß aus der Anlage ausgetragen werden.

Bevorzugte Metallverbindungen sind eine oder mehrere aus der Gruppe BCl₃, Borsäureester, Borane, SiCl₄, andere Chlorsilane, Silane, Metallhalogenide, teilweise hydrierte Metallhalogenide, Metallhydride, Metallalkoholate, Metallalkyle, Metallamide, Metallazide, Metallboranate und Metallcarbonyle.

Bevorzugte weitere Reaktionspartner sind einer oder mehrere aus der Gruppe H₂, NH₃, Hydrazin, Amine, CH₄, andere Alkane, Alkene, Alkine, Aryle, O₂, Luft, BCl₃, Borsäureester, Borane, SiCl₄, andere Chlorsilane und Silane.

Nach diesem Verfahren können nano- oder mikrodisperse (kristallin oder amorph) Metall- und/oder Keramikpulver hergestellt werden, wobei bevorzugte Metall- und/oder Keramikpulver Carbide, Nitride, Boride, Silizide, Phosphite, Sulfide, Oxide und/oder Kombinationen daraus der Elemente B, Al, Si, Ti, Zr, Hf; V, Nb, Ta, Cr, Mo, W, La, Y, Fe, Co, Ni oder diese Elemente alleine oder in Kombination miteinander sind.

Es ist möglich, nach diesem Verfahren Metall- und Keramikpulver mit einer einstellbaren Partikelgröße zwischen 1 und 3 000 nm (3 µm) herzustellen, die eine extrem enge Teilchengrößenverteilung aufweisen. Charakteristisch für die so hergestellten Teilchen ist das vollständige Fehlen von Partikeln, die wesentlich größer als die Durchschnittskorngröße sind. So weisen die nach dem Verfahren hergestellten Pulver im allgemeinen weniger als 1 % Einzelpartikel auf, die mehr als 20 % von der mittleren Korngröße abweichen. Teilchen, die mehr als 50 % abweichen, sind nicht vorhanden.

Die nichtoxidischen Pulver weisen äußerst geringe Sauerstoffgehalte (kleiner 1 000 ppm) auf. Weitere Charakteristika der Pulver sind ihre hohe Reinheit, hohe Oberflächenreinheit und gute Reproduzierbarkeit.

Nach dem erfindungsgemäßen Verfahren ist es möglich, die Metall- oder Keramikpulver bei äußerst niedrigen Temperaturen vollständig zu sintern. Bevorzugt beträgt dabei die Sintertemperatur 0,4 bis 0,6 der Schmelz- bzw. Zersetzungstemperatur. Hierdurch eröffnen sich neue Anwendungsgebiete für entsprechende Keramiken.

Um die Agglomerate des Metall- und Keramikausgangsmaterials in dem Dispergiermedium auf ihre Primärteilchen zu deagglomerieren und eine stabile nanodisperse Suspension herzustellen, werden erfindungsgemäß Oberflächenmodifikatoren eingesetzt, d.h. oberflächenmodifizierende niedrigmolekulare organische (= kohlenstoffhaltige) Verbindungen, die über mindestens (und vorzugsweise) eine funktionelle Gruppe verfügen, die mit an der Oberfläche der Metall- und Keramikteilchen vorhandenen Gruppen reagieren und/oder (zumindest) wechselwirken kann. Hierzu eignen sich insbesondere Verbindungen mit einem Molekulargewicht, das nicht höher als 1 000, vorzugsweise nicht höher als 500 und insbesondere nicht höher als 350 ist. Derartige Verbindungen sind vorzugsweise unter Normalbedingungen flüssig und in dem Dispergiermedium löslich oder zumindest emulgierbar.

Derartige Verbindungen weisen vorzugsweise nicht mehr als insgesamt 30, insbesondere nicht mehr als insgesamt 20 und besonders bevorzugt nicht mehr als 15 Kohlenstoffatome auf. Die funktionellen Gruppen, die diese Verbindungen tragen müssen, richten sich in erster Linie nach den Oberflächengruppen des jeweils eingesetzten TiN-Ausgangsmaterials und darüber hinaus auch nach der gewünschten Wechselwirkung. Besonders bevorzugt wird es, wenn zwischen den funktionellen Gruppen der oberflächenmodifizierenden Verbindung und den Oberflächengruppen der TiN-Partikel eine Säure/Base-Reaktion nach Bronsted oder Lewis stattfinden kann (einschließlich Komplexbildung und Adduktbildung). Ein Beispiel für eine andere geeignete Wechselwirkung ist die Dipol-Dipol-Wechselwirkung. Beispiele für bevorzugte funktionelle Gruppen sind somit Carbonsäuregruppen (primäre, sekundäre und tertiäre) Aminogruppen und C-H-acide Gruppierungen. Es können auch mehrere dieser Gruppen in einem Molekül vorhanden sein (Betaine, Aminosäuren, EDTA, usw.).

Demgemäß sind Beispiele für besonders bevorzugte Oberflächenmodifikatoren gesättigte oder ungesättigte Mono- und Polycarbonsäuren (vorzugsweise Monocarbonsäuren) mit 1 bis 12 Kohlenstoffatomen (z.B. Ameisensäure, Essigsäure, Propionsäure, Buttersäure, Pentansäure, Hexansäure, Acrylsäure, Methacrylsäure, Crotonsäure, Citronensäure, Adipinsäure, Bernsteinsäure, Glutarsäure, Oxalsäure, Maleinsäure und Fumarsäure). Bei den ungesättigten Carbonsäuren besteht zusätzlich die Möglichkeit, daß mit Hilfe der ethylenisch ungesättigten Doppelbindung eine Vernetzung durchgeführt werden kann.

Beispiele für weitere geeignete Oberflächenmodifikatoren sind Mono- und Polyamine, insbesondere solche der allgemeinen Formel R₃₋ₙNHₙ, worin n = 0,1 oder 2 und die Reste R unabhängig voneinander Alkylgruppen mit 1 bis 12, insbesondere 1 bis 6 und besonders bevorzugt 1 bis 4 Kohlenstoffatomen darstellen (z.B. Methyl, Ethyl, n- und i-Propyl und Butyl) und Ethylenpolyamine (z.B. Ethylendiamin, Diethylentriamin etc.); β-Dicarbonylverbindungen mit 4 bis 12, insbesondere 5 bis 8 Kohlenstoffatomen, wie z.B. Acetylaceton, 2,4-Hexandion, 3,5-Heptandion, Acetessigsäure und Acetessigsäure-C₁C₄-Alkylester, Organoalkoxysilane, wie z.B. diejenigen, die zur Oberflächenmodifizierung von kolloidaler Kieselsäure eingesetzt werden (z.B. solche der allgemeinen Formel R₄₋ₘSi(OR')ₘ, worin die Gruppen R und R' unabhängig voneinander C₁₋₄-Alkyl darstellen und m 1, 2, 3 oder 4 ist); und modifizierte Alkoholate, bei denen ein Teil der OR-Gruppen (R wie oben definiert) durch inerte organische Gruppen substituiert ist und über die noch vorhandenen OR-Gruppen eine Anbindung (Kondensation) auf der Partikeloberfläche erfolgt und die organischen Gruppen die Abschirmung übernehmen. Beispiele hierfür sind z.B. Zirkon- und Titanalkoholate M(OR)₄(M = Ti, Zr), bei denen ein Teil der OR-Gruppen durch einen Komplexbildner, wie z.B. eine β-Dicarbonylverbindung oder eine (Mono)carbonsäure ersetzt ist. Wird eine ethylenisch ungesättigte Verbindung (wie z.B. Methacrylsäure) als Komplexbildner eingesetzt, kann darüber hinaus auch eine Vernetzung stattfinden (siehe oben).

Im Fall des TiN sind besonders bevorzugte Oberflächenmodifikatoren Guanidincarbonat und Guanidinpropionsäure.

Als Dispergiermedium werden Wasser und/oder polare organische Lösungsmittel eingesetzt. Als polare organische Lösungsmittel eignen sich vorzugsweise solche, die mit Wasser mischbar sind. Spezielle Beispiele für verwendbare polare organische Lösungsmittel sind Alkohole, wie z.B. aliphatische Alkohole mit 1 bis 6 Kohlenstoffatomen (insbesondere Methanol), Ethanol, n- und i-Propanol und Butanol); Ketone, wie z.B. Aceton und Butanon; Ester, wie z.B. Essigsäureethylester; Ether, wie z.B. Diethylether, Tetrahydrofuran und Tetrahydropyran, Amide, wie z.B. Dimethylacetarnid und Dimethylformamid; Sulfoxide und Sulfone, wie z.B. Sulfolan und Dimethylsulfoxid; und halogenierte aliphatische Kohlenwasserstoffe. Selbstverständlich können auch Mischungen dieser Lösungsmittel eingesetzt werden.

Das eingesetzte Dispergiermedium hat vorzugsweise einen Siedepunkt, der eine problemlose Entfernung desselben durch Destillation (gegebenenfalls unter reduziertem Druck) ermöglicht. Bevorzugt werden Lösungsmittel mit einem Siedepunkt unter 200°C, insbesondere unter 150°C.

Bei der Durchführung des erfindungsgemäßen Verfahrens beträgt der Gehalt an Dispergiermedium im allgemeinen 20 bis 90, vorzugsweise 30 bis 80 und insbesondere 35 bis 75 Gew.-%. Der Rest der Dispersion setzt sich zusammen aus Keramik- oder Metallausgangspulver und niedrigmolekularer organischer Verbindung (Oberflächenmodifkator). Dabei beträgt das Gewichtsverhältnis Keramik- oder Metallausgangspulver/Oberflächenmodifikator im allgemeinem 1 000:1 bis 4:1, insbesondere 500:1 bis 8:1 und besonders bevorzugt 250:1 bis 10:1.

Das erfindungsgemäße Verfahren wird vorzugsweise bei einer Temperatur von Raumtemperatur (ca. 20°C) bis zur Siedetemperatur des Dispergiermediums durchgeführt. Bevorzugt sind Dispergiertemperaturen im Bereich von 50 bis 100°C. In einer besonders bevorzugten Ausführungsform wird unter Rückfluß des Dispergiermediums gearbeitet.

Die Dispergierzeit hängt insbesonderte von der Art der eingesetzten Materialien ab, beträgt aber im allgemeinen einige Minuten bis mehrere Stunden, z.B. 1 bis 24 Stunden.

Zur Verbesserung der Deagglomeration kann die Dispersion (Suspension) gegebenenfalls mit Ultraschall, Intensivmischern oder in der Keramik üblichen Mahlverfahren, z.B. Rührwerkskugelmühlen, behandelt werden.

Nach Beendigung der Oberflächenmodifizierung kann die erhaltenen Dispersion (Suspension) entweder als solche weiterverarbeitet werden (d.h. zur Herstellung von Grünkörpern oder zum Beschichten von Substraten), oder das Dispergiermedium wird von der Weiterverarbeitung ganz oder teilweise (z.B. bis zu einer gewünschten Feststoffkonzentration) entfernt. Ein besonders bevorzugtes Verfahren zur Entfernung des Dispergiermediums ist die Gefriertrocknung oder Gefriersprühtrocknung.

Nach dem Trocknen kann das oberflächenmodifizierte Metall- oder Keramikpulver gegebenenfalls in einem anderen Dispergiermedium, das Wasser und/oder ein organisches Lösungsmittel umfaßt, redispergiert werden. Für eine vollständige Redispergierung hat es sich bewährt, das Pulver zunächst mit dem Oberflächenmodifikator zu modifizieren und dann in einem organischen Lösungsmittel, einem Gemisch aus organischem Lösungsmittel und Wasser oder auch reinem Wasser zu redispergieren.

Die nach dem erfindungsgemäßen Verfahren erhaltenen Metall- oder Keramiksuspensionen bzw. das trockene oberflächenmodifizierte nanoktistalline Metall- oder Keramikpulver haben eine Teilchengrößenverteilung unter 100 nm. Sie können zwecks Herstellung von Grünkörpern bzw. Sinterkörpern oder -schichten auf verschiedene Weise weiterverarbeitet werden. Beispielsweise kann man Extrusionsmassen herstellen, die nach der Extrusion zu fertigen Formkörpern gesintert werden können. Hierbei werden gewöhnlich pro 100 Gew.-Teile Extrusionsmassen 20 bis 80, insbesondere 30 bis 70 und besonders bevorzugt 40 bis 60 Gew.-Teile oberflächenmodifiziertes Metall- oder Keramikpulver (entweder als solches oder in Form einer z.B. wie oben hergestellten Dispersion), 10 bis 70, insbesondere 20 bis 60 und besonders bevorzugt 30 bis 50 Gew.-Teile Dispergiermedium und 0,5 bis 20, insbesondere 2 bis 15, besonders bevorzugt 5 bis 10 Gew.-Teile Additive, die aus Bindemitteln, Plastifiziermitteln und Mischungen davon ausgewählt werden, eingesetzt.

Die erwähnten Bindemittel und Plastifiziermittel werden vorzugsweise aus modifizierten Cellulosen (z.B. Methylcellulose, Ethylcellulose, Propylcellulose und Carboxy-modifizierte Cellulose), Polyalkylenglykolen (insbesondere Polyethylenglykol und Polypropylenglykol, vorzugsweise mit einem durchschnittlichen Molekulargewicht von 400 bis 50 000), Dialkylphthalaten (z.B. Dimethylphthalat, Diethylphthalat, Dipropylphthalat und Dibutylphthalat) und Mischungen dieser Substanzen ausgewählt. Selbstverständlich können auch andere Binde- und Plastifiziermittel eingesetzt werden, wie z.B. Polyvinylalkohol etc.

Die obigen Bindemittel und Plastifiziermittel werden benötigt, um eine extrusionsfähig Masse und eine ausreichende Formstabilität nach der Formgebung zu gewährleisten.

Nach gründlicher Durchmischung der obigen Komponenten (z.B. in einer herkömmlichen Mischvorrichtung) kann ein Teil des Dispergiermediums (vorzugsweise unter reduziertem Druck) wieder entfernt werden, bis die Extrusionsmassen den gewünschten Feststoffgehalt aufweisen. Bevorzugte Feststoffgehalte der Extrusionsmasse liegen bei mindestens 30 und insbesondere mindestens 40 Vol.-%.

Andere bevorzugte Formgebungsverfahren sind die Elektrophorese, der Schlickerguß, der Schlickerdruckguß und das Filterpressen sowie Kombinationen von Elektrophorese und Schlickerguß, Schlickerdruckguß oder Filterpressen; ferner das Spritzgießen, Faserspinnen, Gel-Casting und Zentrifugieren. Mit diesen Formgebungsverfahren werden kompakte Formkörper mit hohen Gründichten erhalten. Ebenso ist es möglich, die Suspensionen für Beschichtungszwecke einzusetzen. Geeignete Beschichtungsverfahren sind z.B. Tauchen, Spin-coating, Rakeln, Streichen und die Elektrophorese. Als Substrate kommen z.B. Metalle, Keramiken, Hartmetalle, Glas und Cermets in Frage.

Die hergestellten Grünkörper bzw. Schichten können dann getrocknet und einer Sinterbehandlung unterzogen werden. Dabei hat sich überraschenderweise gezeigt, daß die gewünschte Verdichtung bereits bei relativ niedrigen Temperaturen erfolgt. Ferner werden überraschenderweise keine Sinteradditive benötigt. Die Sintertemperatur liegt gewöhnlich im Bereich von 0,4 bis 0,6 der Schmelz- bzw. Zersetzungstemperatur. Dies ist deutlich niedriger als nach dem Stand der Technik, wo gewöhnlich Temperaturen nahe der Schmelz- bzw. Zersetzungstemperatur, Sinteradditive und gegebenenfalls noch Druck benötigt werden.

Die erhaltenen Keramik- und Metallsinterkörper bzw. -schichten sind gekennzeichnet durch ein nanoskaliges Gefüge mit einer Korngröße unterhalb 100 nm, einer Dichte > 95 % der Theorie und einer hohen Härte.

Die erfindungsgemäß hergestellten Metall- und Keramiksinterformkörper finden z.B. Anwendung als
- Bulk-Keramik z.B. für Schleifpulver;
- Beschichtungsmaterial für Metalle, Keramik und Glas für Dekorationszwecke, Verschleißschutz, tribologische Anwendungen, Korrosionsschutz, insbesondere als Schicht auf Schneidwerkzeugen und Schleifmitteln bzw. Schleifpulvern;
- Bestandteil in Keramik/Keramik-Kompositen. Als Matrixphase kommen insbesondere Al₂O₃, TiC, SiC und Si₃N₄ in Frage.
- Bestandteil von Nanokompositen;
- Sinterhilfsmittel für gröbere Keramiken;
- Metall/Keramik-Komposite vom Typ Hartstoffe;
- Cermets;
- Mikroporöse Schichten für Filtrationszwecke, z.B. Mikro-Ultra-Nano-Filtration und Umkehrosmose.

Die folgenden Beispiele dienen der weiteren Erläuterung der vorliegenden Erfindung, ohne diese jedoch zu beschränken.

### Beispiel 1

### Oberflächenmodifizierung von nanoskaligem TiN

In 200 ml eines Gemisches aus Wasser und Ethanol (Volumenverhältnis 1:1 wird 1 g Guanidinpropionsäure gelöst. Zu der Lösung werden unter ständigem Rühren 10 g TiN-Pulver, welches nach Beispiel 2 der deutschen Patentanmeldung P 42 14 719.0 erhalten wurde, gegeben. Anschließend wird das Gemisch 5 h unter Rückfluß bei 100°C erhitzt. Nach Ablauf der Reaktionszeit wird die Suspension abgetrennt und der Filterrückstand mit Ethanol gewaschen. Das erhaltene feuchte Pulver wird 8 h bei 70°C getrocknet.

### Beispiel 2

### Redispergierung und Verschlickerung des TiN-Pulvers

60 g des oberflächenmodifizierten TiN-Pulvers aus Beispiel 1 werden unter ständigem Rühren und zwischenzeitlicher Ultraschallbehandlung zu 100 ml Wasser gegeben. Hierbei wird der pH der Suspension durch Zugabe von Tetrabutylammoniumhydroxid bei einem Wert von etwa 9 gehalten. Es resultiert ein stabiler Schlicker mit 37,5 Gew.-% Feststoffgehalt. Die Teilchengröße liegt im Bereich von 20 bis 50 nm.

### Beispiel 3

Das Verfahren von Beispiel 2 wird wiederholt, jedoch verwendet man Methanol anstelle von Wasser als Redispergiermedium.

### Beispiel 4

Das Verfahren von Beispiel 2 wird wiederholt, jedoch verwendet man Ethanol anstelle von Wasser als Redispergiermedium.

### Beispiel 5

### Grünkörperherstellung aus dem TiN-Schlicker (Schlickerguß)

50 ml des 37,5 Gew.-%igen TiN-Schlickers aus Beispiel 2 werden in eine runde PMMA-Form gegossen (Durchmesser: 40 mm, Höhe: 50 mm, Porenweite 1 µm). Nach einer Standzeit von 6 h entsteht ein Grünkörper mit den Abmessungen: Durchmesser 40 mm, Höhe 3 mm, Gründichte 40-50 % d. Th.

### Beispiel 6

Gemäß Beispiel 5 wird ein Grünkörper hergestellt, jedoch wird zusätzlich Druck angewandt (z.B. 5 bar), um die Gießzeit zu verkürzen.

### Beispiel 7

### Sintern des Grünkörpers

Gemäß Beispiel 5 hergestellte Grünkörper werden unter kontrollierter Feuchte und Temperatur in einem Klimaschrank getrocknet. Nach dem Trocknen werden sie in Argonatmosphäre bei Temperaturen zwischen 1 100°C und 1 300°C gesintert. Die Aufheizrate beträgt bis T = 600°C 3 K/min, zwischen 600°C und der isothermen Haltetemperatur 20 K/min. Durch diese Sinterbehandlung erreichen die Proben realtive Dichten über 95 % d. Th. und weisen mittlere Korngrößen unterhalb von 100 nm auf.

### Beispiel 8

### Beschichtung von Al₂O₃-Substraten

Nach dem Verfahren von Beispiel 1 wird eine 20 Gew.-%ige wäßrige Suspension aus oberflächenmodifiziertem TiN-Pulver hergestellt. Eine dichtgesintere Al₂O₃-Platte wird durch Eintauchen in die Suspension beschichtet. Die beschichtete Platte wird getrocknet und bei 1 300°C in einer Argonatmosphäre gesintert. Dabei wird eine feste TiN-Deckschicht mit einer Dicke von etwa 5 µm erhalten.

## Patentansprüche

1. Verfahren zur Herstellung von Keramik- und/oder Metallsinterkörpern oder -schichten, bei dem man nanokristallines Keramik- und/oder Metallpulver in Anwesenheit mindestens einer niedrigmolekularen organischen Verbindung, die über mindestens eine funktionelle Gruppe verfügt, welche mit an der Oberfläche der Pulverteilchen vorhandenen Gruppen reagieren und/oder welchselwirken kann, in Wasser und/oder einem polaren organischen Lösungsmittel als Dispergiermedium dispergiert, das Dispergiermedium entfernt und das oberflächenmodifizierte Keramik- und/oder Metallpulver, das vor oder nach dem Entfernen des Dispergiermediums zu Grunkörpern oder Schichten verarbeitet worden ist, sintert, dadurch gekennzeichnet, daß bei dem genannten nanokristallinen Keramik- und/oder Metallpulver weniger als 1 % der Einzelpartikel eine Abweichung von mehr als 40 % und keine Einzelpartikel eine Abweichung von mehr als 60 % von der mittleren Korngröße aufweisen.

2. Verfahren gemäß Anspruch 1, dadurch gekennzeichnet, daß weniger als 1 % der Einzelpartikel eine Abweichung von mehr als 20 % und keine Einzelpartikel eine Abweichung von mehr als 50 % von der mittleren Korngröße aufweisen.

3. Verfahren gemäß einem der Ansprüche 1 oder 2, dadurch gekennzeichnet, daß weniger als 1 % der Einzelpartikel eine Abweichung von mehr als 10 % und keine Einzelpartikel eine Abweichung von mehr als 40 % von der mittleren Korngröße aufweisen.

4. Verfahren gemäß einem oder mehreren der Ansprüche 1 bis 3, dadurch gekennzeichnet, daß die Metall- und/oder Keramikpulver Carbide, Nitride, Boride, Silizide, Phosphide, Sulfide, Oxide und/oder Kombinationen daraus der Elemente B, Al, Si, Ti, Zr, Hf, V, Nb, Ta, Cr, Mo, W, La, Y, Fe, Co, Ni oder diese Elemente alleine oder in Kombination miteinander sind.

5. Verfahren gemäß einem oder mehreren der Ansprüche 1 bis 4, dadurch gekennzeichnet, daß als Metallpulver feinteilige Pulver der Metalle Fe, Co, Ni, W und/oder Mo mit einer definierten Partikelgröße zwischen 1,0 nm und kleiner 100 nm eingesetzt werden.

6. Verfahren gemaß einem oder mehreren der Ansprüche 1 bis 4, dadurch gekennzeichnet, daß als Metallpulver feinteilige Pulver der Metalle B, Al, Si, Ti, Zr, Hf, V, Nb, Ta und/oder Cr mit einer definierten Partikelgröße zwischen 1,0 nm und 3 µm eingesetzt werden.

7. Verfahren gemäß einem oder mehreren der Ansprüche 1 bis 4, dadurch gekennzeichnet, daß als Keramikpulver feinteilige Nichtoxid-Keramikpulver MeX, wobei
Me = B, Al, Si, Ti, Zr, Hf, V, Ta, Nb, Mo, W, La, Fe, Co, Ni und/oder Cr und
X = C, N, B und Si oder Kombinationen daraus, mit Ausnahme von Si₃N₄ größer als 100 nm und AIN größer als 200 nm, eingesetzt werden.

8. Verfahren gemäß einem oder mehreren der Ansprüche 5 bis 7, dadurch gekennzeichnet, daß die genannten Metall- oder Keramikpulver einen Sauerstoffgehalt von weniger als 5 000 ppm aufweisen.

9. Verfahren gemaß einem oder mehreren der Ansprüche 5 bis 8, dadurch gekennzeichnet, daß der Sauerstoffgehalt weniger als 1 000 ppm beträgt.

10. Verfahren gemäß einem oder mehreren der Ansprüche 5 bis 8, dadurch gekennzeichnet, daß der Sauerstoffgehalt weniger als 50 ppm beträgt.

11. Verfahren gemaß einem oder mehreren der Ansprüche 1 bis 4, dadurch gekennzeichnet, daß feinteilige Oxidkeramikpulver der Metalloxide MeO, wobei
Me = Al, Si, Zr, Hf, Ta, Nb, Mo, W, V, La und/oder Y ist, wobei Al₂O₃ in der α-Phase und SiO₂kristallin vorliegt, eingesetzt werden.

12. Verfahren gemäß einem oder mehreren der Ansprüche 5 bis 11, dadurch gekennzeichnet, daß die Summe der Verunreinigungen der Metall- oder Keramikpulver, mit Ausnahme der oxidischen Verunreinigungen, kleiner als 5 000 ppm beträgt.

13. Verfahren gemäß einem oder mehreren Ansprüche 5 bis 12, dadurch gekennzeichnet, daß die Summe der Verunreinigungen, mit Ausnahme der oxidischen Verunreinigungen, kleiner als 1 000 ppm beträgt.

14. Verfahren gemäß einem oder mehreren der Ansprüche 5 bis 13, dadurch gekennzeichnet, daß die Summe der Verunreinigungen, mit Ausnahme der oxidischen Verunreingingen, kleiner als 200 ppm beträgt.

15. Verfahren gemäß einem oder mehreren der Ansprüche 1 bis 14, dadurch gekennzeichnet, daß man das oberflächenmodifizierte Metall- oder Keramikpulver bei einer Temperatur, die 0,4 bis 0,6 der Schmelz- bzw. Zersetzungstemperatur der Pulver beträgt, sintert.

16. Verfahren gemäß einem oder mehreren der Ansprüche 1 bis 15, dadurch gekennzeichnet, daß die niedrigmolekulare organische Verbindung ein Molekulargewicht von nicht mehr als 1 000, insbesondere nicht mehr als 500 aufweist.

17. Verfahren gemäß einem oder mehreren der Ansprüche 1 bis 16, dadurch gekennzeichnet, daß die niedrigmolekulare organische Verbindung aus aliphatischen, gesättigten oder ungesättigten C₁-C₁₂-Monocarbonsäuren, Polycarbonsäuren, Aminen der Formel R₃₋ₙNHₙ, worin n = 0,1 oder 2 und die Reste R unabhängig voneinander Alkylgruppen mit 1 bis 12, insbesondere 1 bis 6, Kohlenstoffatomen darstellen, β-Dicarbonylverbindungen mit 4 bis 12, insbesondere 5 bis 8 Kohlenstoffatomen, Titansäureestern, modifizierten Alkoholaten und Organoalkoxysilanen ausgewählt wird.

18. Verfahren gemäß einem oder mehreren der Ansprüche 1 bis 17, dadurch gekennzeichnet, daß das Dispergiermedium ein Gemisch aus Wasser und einem polaren organischen Lösungsmittel umfaßt.

19. Verfahren gemäß einem oder mehreren der Ansprüche 1 bis 18, dadurch gekennzeichnet, daß 20 bis 90, und insbesondere 30 bis 80 Gew.-% Dispergiermedium, bezogen auf das Gesamtgewicht von Dispergiermedium, Keramik- und Metallpulver und niedrigmolekularer organischer Verbindung, eingesetzt werden.

20. Verfahren gemäß einem oder mehreren der Ansprüche 1 bis 19, dadurch gekennzeichnet, daß das Gewichtsverhältnis Keramik- oder Metallpulver/niedrigmolekulare organische Verbindung 1 000:1 bis 4:1, insbesondere 500:1 bis 8:1, beträgt.

21. Verfahren gemäß einem oder mehreren der Ansprüche 1 bis 20, dadurch gekennzeichnet, daß die Dispergierung bei einer Temperatur von 20°C bis zur Siedetemperatur des Dispergiermediums, vorzugsweise unter Rückfluß des Dispergiermediums, durchgeführt wird.

22. Verfahren gemäß einem oder mehreren der Ansprüche 1 bis 21, dadurch gekennzeichnet, daß das Dispergiermedium durch Gefriertrocknen oder Gefriersprühtrocknen entfernt wird.

23. Verfahren gemäß einem oder mehreren der Ansprüche 1 bis 22, dadurch gekennzeichnet, daß man das oberflächenmodifizierte Keramik- oder Metallpulver nach dem Abtrennen des Dispergiermediums in einem anderen Medium redispergiert.

## Claims

1. Process for the production of ceramic and/or metal sintered bodies or layers, in which nanocrystalline ceramic and/or metal powder is, in the presence of at least one low molecular weight organic compound having at least one functional group capable of reacting and/or interacting with groups present on the surface of the powder particles, dispersed in water and/or a polar organic solvent as a dispersant, the dispersant is removed and the surface-modified ceramic or metal powder, which, before or after the removal of the dispersant, has been processed to form green compacts or layers, is sintered, characterised in that, in the stated nanocrystalline ceramic and/or metal powder, less than 1% of the individual particles deviate by more than 40% and no individual particle deviates by more than 60% from the average grain size.

2. Process according to claim 1, characterised in that less than 1% of the individual particles deviate by more than 20% and no individual particle deviates by more than 50% from the average grain size.

3. Process according to one of claims 1 or 2, characterised in that less than 1% of the individual particles deviate by more than 10% and no individual particle deviates by more than 40% from the average grain size.

4. Process according to one or more of claims 1 to 3, characterised in that the metal and/or ceramic powders are carbides, nitrides, borides, silizides, phosphides, sulphides, oxides and/or combinations thereof of the elements B, Al, Si, Ti, Zr, Hf, V, Nb, Ta, Cr, Mo, W, La, Y, Fe, Co, Ni or these elements alone or in combination with each other.

5. Process according to one or more of claims 1 to 4, characterised in that the metal powders used are finely divided powders of the metals Fe, Co, Ni, W and/or Mo having a defined particle size of between 1.0 nm and less than 100 nm.

6. Process according to one or more of claims 1 to 4, characterised in that the metal powders used are finely divided powders of the metals B, Al, Si, Ti, Zr, Hf, V, Nb, Ta and/or Cr having a defined particle size of between 1.0 nm and 3 µm.

7. Process according to one or more of claims 1 to 4, characterised in that the ceramic powder used is a finely divided non-oxide ceramic powder MeX, wherein
Me = B, Al, Si, Ti, Zr, Hf, V, Ta, Nb, Mo, W, La, Fe, Co, Ni and/or Cr and
X = C, N, B and Si or combinations thereof, with the exception of Si₃N₄ larger than 100 nm and AlN larger than 200 nm.

8. Process according to one or more of claims 5 to 7, characterised in that the stated metal or ceramic powders have an oxygen content of less than 5000 ppm.

9. Process according to one or more of claims 5 to 8, characterised in that the oxygen content is less than 1000 ppm.

10. Process according to one or more of claims 5 to 8, characterised in that the oxygen content is less than 50 ppm.

11. Process according to one or more of claims 1 to 4, characterised in that finely divided oxide ceramic powders of the metal oxides MeO are used, wherein
Me = Al, Si, Zr, Hf, Ta, Nb, Mo, W, V, La and/or Y, wherein Al₂O₃ is present in the α-phase and SiO₂ is in the crystalline form.

12. Process according to one or more of claims 5 to 11, characterised in that the sum of impurities in the metal or ceramic powders, with the exception of oxide impurities, is less than 5000 ppm.

13. Process according to one or more of claims 5 to 12, characterised in that the sum of impurities, with the exception of oxide impurities, is less than 1000 ppm.

14. Process according to one or more of claims 5 to 13, characterised in that the sum of impurities, with the exception of oxide impurities, is less than 200 ppm.

15. Process according to one or more of claims 1 to 14, characterised in that the surface-modified metal or ceramic powder is sintered at a temperature of 0.4 to 0.6 the melting or decomposition temperature of the powder.

16. Process according to one or more of claims 1 to 15, characterised in that the low molecular weight organic compound has a molecular weight of no more than 1000, in particular of no more than 500.

17. Process according to one or more of claims 1 to 16, characterised in that the low molecular weight organic compounds are selected from aliphatic, saturated or unsaturated C₁-C₁₂ monocarboxylic acids, polycarboxylic acids, amines of the formula R₃₋ₙNHₙ, in which n = 0, 1 or 2 and the residues R mutually independently denote alkyl groups having 1 to 12, in particular 1 to 6 carbon atoms, β-dicarbonyl compounds having 4 to 12, in particular 5 to 8 carbon atoms, titanic acid esters, modified alkoxides and organoalkoxysilanes.

18. Process according to one or more of claims 1 to 17, characterised in that the dispersant comprises a mixture of water and a polar organic solvent.

19. Process according to one or more of claims 1 to 18, characterised in that 20 to 90 and in particular 30 to 80 wt.% of dispersant are used relative to the total weight of dispersant, ceramic and metal powders and low molecular weight organic compound.

20. Process according to one or more of claims 1 to 19, characterised in that the weight ratio of ceramic or metal powder to low molecular weight organic compound is 1000:1 to 4:1, in particular 500:1 to 8:1.

21. Process according to one or more of claims 1 to 20, characterised in that dispersion is performed at a temperature of 20°C up to the boiling temperature of the dispersant, preferably with refluxing of the dispersant.

22. Process according to one or more of claims 1 to 21, characterised in that the dispersant is removed by freeze drying or freeze spray drying.

23. Process according to one or more of claims 1 to 22, characterised in that, after separation of the dispersant, the surface-modified ceramic or metal powder is redispersed in another medium.

## Revendications

1. Procédé pour la préparation de corps frittés céramiques et/ou métalliques ou pour l'application de couches frittées céramiques et/ou métalliques dans lequel on disperse dans l'eau et/ou dans un solvant organique polaire servant de milieu de dispersion une poudre céramique et/ou métallique nanocristalline, en présence d'au moins un composé organique à bas poids moléculaire portant au moins un groupe fonctionnel capable de réagir et/ou d'exercer des actions mutuelles avec les groupes présents à la surface des particules de la poudre, on élimine le milieu de dispersion et on fritte la poudre céramique et/ou métallique modifiée en surface, laquelle, avant ou après l'élimination du milieu de dispersion, a été façonnée en corps cru ou couche crue, ce procédé se caractérisant en ce que, dans la poudre céramique et/ou métallique nanocristalline en question, moins de 1 % des particules individuelles s'écartent de plus de 40 % et aucune particule individuelle ne s'écarte de plus de 60 % de la dimension de grain moyenne.

2. Procédé selon la revendication 1, caractérisé en ce que moins de 1 % des particules individuelles s'écartent de plus de 20 % et aucune particule individuelle ne s'écarte de plus de 50 % de la dimension de grain moyenne.

3. Procédé selon l'une des revendications 1 ou 2, caractérisé en ce que moins de 1 % des particules individuelles s'écartent de plus de 10 % et aucune particule individuelle ne s'écarte de plus de 40 % de la dimension de grain moyenne.

4. Procédé selon une ou plusieurs des revendications 1 à 3, caractérisé en ce que les poudres métalliques et/ou céramiques consistent en carbures, nitrures, borures, siliciures, phosphures, sulfures, oxydes et/ou combinaisons de ces dérivés, des éléments B, Al, Si, Ti, Zr, Hf, V, Nb, Ta, Cr, Mo, W, La, Y, Fe, Co, Ni, ou en ces éléments seuls ou en combinaison entre eux.

5. Procédé selon une ou plusieurs des revendications 1 à 4, caractérisé en ce que les poudres métalliques sont des poudres en fines particules des métaux Fe, Co, Ni, W et/ou Mo ayant une dimension de particule définie qui va de 1,0 nm à moins de 100 nm.

6. Procédé selon une ou plusieurs des revendications 1 à 4, caractérisé en ce que les poudres métalliques sont des poudres en fines particules des métaux B, Al, Si, Ti, Zr, Hf, V, Nb, Ta et/ou Cr à une dimension de particule définie comprise entre 1,0 nm et 3 µm.

7. Procédé selon une ou plusieurs des revendications 1 à 4, caractérisé en ce que l'on utilise en tant que poudres céramiques des poudres en fines particules autres que des oxydes et du type MeX dans lequel
Me = B, Al, Si, Ti, Zr, Hf, V, Ta, Nb, Mo, W, La, Fe, Co, Ni et/ou Cr et
X = C, N, B et Si ou leurs combinaisons, à l'exception de Si₃N₄ en particules supérieures à 100 nm et AIN en particules supérieures à 200 nm.

8. Procédé selon une ou plusieurs des revendications 5 à 7, caractérisé en ce que les poudres métalliques ou céramiques en question ont une teneur en oxygène inférieure à 5 000 ppm.

9. Procédé selon une ou plusieurs des revendications 5 à 8, caractérisé en ce que la teneur en oxygène est inférieure à 1 000 ppm.

10. Procédé selon une plusieurs des revendications 5 à 8, caractérisé en ce que la teneur en oxygène est inférieure à 50 ppm.

11. Procédé selon une ou plusieurs des revendications 1 à 4, caractérisé en ce que les poudres céramiques en fines particules du type oxyde sont des oxydes métalliques MeO dans lesquels
Me = Al, Si, Zr, Hf, Ta, Nb, Mo, W, V, La et/ou Y, Al₂O₃ étant en phase α et SiO₂ à l'état cristallin.

12. Procédé selon une ou plusieurs des revendications 5 à 11, caractérisé en ce que la somme des impuretés des poudres métalliques ou céramiques, à l'exception des impuretés du type oxyde, est inférieure à 5 000 ppm.

13. Procédé selon une ou plusieurs des revendications 5 à 12, caractérisé en ce que la somme des impuretés, à l'exception des impuretés du type oxyde, est inférieure à 1 000 ppm.

14. Procédé selon une ou plusieurs des revendications 5 à 13, caractérisé en ce que la somme des impuretés, à l'exception des impuretés du type oxyde, est inférieure à 200 ppm.

15. Procédé selon une ou plusieurs des revendications 1 à 14, caractérisé en ce que les poudres métalliques ou céramiques modifiées en surface sont frittées à une température qui représente de 0,4 à 0,6 fois la température de fusion ou de décomposition de la poudre.

16. Procédé selon une ou plusieurs des revendications 1 à 15, caractérisé en ce que le composé organique à bas poids moléculaire a un poids moléculaire qui ne dépasse pas 1 000 et plus spécialement qui ne dépasse pas 500.

17. Procédé selon une ou plusieurs des revendications 1 à 16, caractérisé en ce que le composé organique à bas poids moléculaire est choisi parmi les acides monocarboxyliques aliphatiques saturés ou insaturés en C₁-C₁₂, les acides polycarboxyliques, les amines de formule R₃₋ₙNHₙ, dans laquelle n = 0, 1 ou 2 et les symboles R représentent chacun, indépendamment l'un de l'autre, un groupe alkyle en C₁-C₁₂, plus spécialement C₁-C₆, les dérivés β-dicarbonylés contenant 4 à 12, plus spécialement 5 à 8 atomes de carbone, les esters titaniques, les alcoolates modifiés et les organoalcoxysilanes.

18. Procédé selon une ou plusieurs des revendications 1 à 17, caractérisé en ce que le milieu de dispersion consiste en un mélange d'eau et d'un solvant organique polaire.

19. Procédé selon une ou plusieurs des revendications 1 à 18, caractérisé en ce que l'on utilise de 20 à 90, plus spécialement de 30 à 80 % en poids du milieu de dispersion par rapport au poids total du milieu de dispersion, de la poudre céramique ou métallique et du composé organique à bas poids moléculaire.

20. Procédé selon une ou plusieurs des revendications 1 à 19, caractérisé en ce que les proportions relatives en poids poudre céramique ou métallique/composé organique à bas poids moléculaire vont de 1 000:1 à 4:1, plus spécialement de 500:1 à 8:1.

21. Procédé selon une ou plusieurs des revendications 1 à 20, caractérisé en ce que la mise en dispersion est réalisée à une température comprise entre 20°C et la température d'ébullition du milieu de dispersion, de préférence au reflux du milieu de dispersion.

22. Procédé selon une plusieurs des revendications 1 à 21, caractérisé en ce que le milieu de dispersion est éliminé par lyophilisation ou par séchage par atomisation avec congélation.

23. Procédé selon une ou plusieurs des revendications 1 à 22, caractérisé en ce que, après séparation du milieu de dispersion, on redisperse la poudre céramique ou métallique modifiée en surface dans un autre milieu.
